# FASCICULE DE BREVET EUROPEEN

(11) **EP 0 807 295 B1**
(45) Date de publication et mention de la délivrance du brevet: **21.10.1998**
(21) Numéro de dépôt: 96902309.2
(22) Date de dépôt: 30.01.1996
(51) Int. Cl.: G06K 7/06

(54) **CONNECTEUR POUR APPAREIL LECTEUR DE CARTE A MICROCIRCUIT ET LECTEUR DE CARTE COMPRENANT UN TEL CONNECTEUR**
VERBINDER FÜR MIKROSCHALTUNGSKARTENLESEGERÄT UND KARTENLESER MIT EINEM DERARTIGEN VERBINDER
CONNECTOR FOR A SMART CARD READER APPARATUS AND CARD READER COMPRISING SAME

(30) Priorité: 03.02.1995 FR 9501271
(43) Date de publication de la demande: 19.11.1997
(73) Titulaire: FRAMATOME CONNECTORS INTERNATIONAL, 92400 Courbevoie (FR)
(72) Inventeur: BOURNE, Frédéric, F-92200 Neuilly-sur-Seine (FR)
(74) Mandataire: Keib, Gérard
(86) Numéro de dépôt international: FR9600156
(87) Numéro de publication internationale: WO9624111

(56) Documents cités:
- EP-A- 0 139 593
- EP-A- 0 325 458
- EP-A- 0 363 871
- EP-A- 0 482 548
- US-A- 5 161 992

## Description

L'invention concerne un connecteur pour appareil lecteur de carte à microcircuit.

L'invention concerne également un appareil lecteur de carte à microcircuit comprenant un tel connecteur.

Dans le cadre de l'invention, on entend par "carte" toutes les cartes comportant un circuit intégré monolithique ou hybride, dit "puce". Il s'agit, par exemple, de carte du format "carte de crédit", connue encore sous la dénomination "CAM" (Carte A Mémoire"). Le plus souvent, le microcircuit de la carte comprend un microprocesseur ou un microcontrôleur, comportant, notamment des circuits de mémoire, par exemple de type "PROM". Ce type de carte est destiné à être inséré dans des dispositifs spécifiques de lecture et/écriture de données. Pour simplifier, ces dispositifs seront appelés "lecteurs" dans ce qui suit, étant bien entendu qu'il peut également assurer l'écriture de données et d'autres fonctions annexes (alimentation en énergie électrique, tests, etc...) Les données sont stockées dans les circuits mémoires précités, généralement sous forme cryptée. Elles sont donc lues à partir de positions mémoires ou au contraires écrites dans ces positions mémoires.

Dans tous les cas, il existe des organes d'entrée-sortie constitués par des plages de contact affleurant en surface d'une des faces principales de la carte. Diverses normes définissent la position de ces plages de contact. Ils servent, non seulement pour les entrées-sorties de données précitées, mais aussi pour l'alimentation en énergie électrique du microcircuit ainsi que pour effectuer diverses vérifications, selon les applications considérées (test de présence, etc.). Le lecteur comporte des contacts balais qui viennent en contact galvanique avec les plages précitées, lorsque la carte est correctement insérée dans un connecteur prévu à cet effet.

Dans cette application un certain nombre de problèmes doivent être résolus simultanément, dont les suivants :
1. La mise sous tension du microcircuit de la carte ne doit s'effectuer que si les contacts balais sont correctement positionnés sur les plages de contact de la carte. Une mise sous tension, en position incorrecte, non seulement ne permet pas le fonctionnement du système lecteur, mais peut éventuellement endommager les circuits électroniques du microcircuit.
2. En particulier, il est nécessaire que les balais relatifs aux signaux de données soient en position avant que la tension d'alimentation soit envoyée sur le microcircuit.
3. L'utilisateur peut retirer la carte en cours de traitement (cas dit "d'arrachement"). Il est alors nécessaire que le lecteur réagisse très rapidement pour couper l'alimentation électrique avant que les balais n'atteignent des positions interdites (c'est-à-dire dangereuse pour l'intégrité des circuits du microcircuit).
4. L'utilisation, quelle qu'en soit la cause, accident ou tentative de fraude, d'un objet non conforme, par exemple d'une plaque électriquement conductrice ou d'une carte truquée, peut également provoquer des défauts.

Dans tous ces cas, il est nécessaire de bloquer le fonctionnement du lecteur et couper l'alimentation en énergie électrique pour limiter les risques de détérioration des circuits et/ou tentatives de fraude.

Il existe de nombreux systèmes de lecteurs visant à résoudre tout ou partie de ces problèmes. Il est possible de les classer en trois grandes catégories.

La première catégorie est constituée par des systèmes de détection électronique.

Dans ce type de systèmes, avant d'envoyer une tension électrique au microcircuit, on procède à un test électrique, par exemple la mesure de la résistance entre les contacts balais. Si ces tests ne correspondent pas à des valeurs prévues, dans une gamme donnée, il en est déduit que la carte est mal insérée ou qu'un objet étranger est introduit à sa place.

Ce type de système comporte plusieurs inconvénients et parmi lesquels, les suivants :
- Le système devrait fonctionner pour tous les types de microcircuits dont sont équipées les cartes du marché, du moins pour une application donnée (cartes bancaires, etc.). Or la variété de microcircuits est trop importante pour permettre une procédure simple et unique.
- La détection s'effectue juste au passage entre une zone interdite et une zone de fonctionnement. Il est aisé de comprendre, qu'en cas d'arrachement, le système doit réagir très rapidement. L'électronique appropriée à cette fonction est complexe et donc coûteuse.

La deuxième catégorie est constituée par des systèmes dits "à atterrissage". Un exemple d'un tel système est décrit dans la demande de brevet français FR-A-2 628 901.

Conformément à ces systèmes, la carte est positionnée contre une butée avant mise en contact avec les balais. Le contact s'effectue par déplacement relatif de la carte vers les balais, perpendiculairement à la surface de la carte (faces principales).

La sécurité peut n'être assurée que par le bon fonctionnement des organes mécaniques du système. On peut cependant les doubler par un contact type "fin de course" qui bloque la séquence de mise sous tension au cas où la carte ne serait pas en position correcte. Un séquencement de la mise sous tension peut être assurée par la hauteur des balais, ou par une initialisation de l'électronique par fermeture d'un contact "présence carte". Un tel système est décrit par exemple dans le brevet européen EP 0 139 593. Ce brevet décrit en effet, un appareil lecteur de carte à microcircuit comprenant:
- un connecteur comportant un corps supportant des éléments de contact balais destinés à être mis en contact électrique avec des plages conductrices associées audit microcircuit de la carte lorsque celle-ci est insérée dans le connecteur; et
- un circuit intégré comportant des moyens pour contrôler des opérations d'insertion ou de retrait de la carte dans le lecteur, ledit circuit étant relié, d'une part, avec au moins une partie desdits éléments de contact balais et, d'autre part, avec le circuit électronique du lecteur de carte.

Le principal inconvénient de ce système est constitué par le fait que l'agencement mécanique nécessaire pour réaliser les fonctions précitées est complexe et coûteux.

La troisième catégorie est constituée par des systèmes à contact balais frottants avec contact de "fin de course". Un tel système est divulgué, par exemple, par la demande de brevet français FR-A-2 623 314.

Conformément à ces systèmes, les connecteurs dans lesquels sont insérées les cartes sont munis d'un contact de "fin de course" qui déclenche la mise sous tension du microcircuit lorsque la carte est en position correcte.

L'agencement mécanique est simple et peu coûteux, cependant il présente au moins l'inconvénient de nécessiter l'incorporation, dans l'électronique du lecteur, de circuits de gestion du contact "fin de course" précité.

Des inconvénients sont en outre communs à plusieurs systèmes.

Dans le cas des systèmes de détection électronique ou utilisant des contacts "fin de course", des fonctions propres à la gestion de la position de la carte doivent être implémentées dans l'électronique du lecteur, donc être prises en compte dans les études de chaque application.

Pour des raisons de rapidité de développement et de diminution des coûts, les concepteurs d'appareils lecteurs utilisent le plus souvent des systèmes à microprocesseurs. Ils présentent naturellement une bonne souplesse puisqu'il suffit de modifier le programme lorsque les caractéristiques d'une application donnée évoluent, pour une raison ou une autre. Cependant, comme il est bien connu, une logique programmée est plus lente qu'une logique câblée effectuant les mêmes fonctions.

L'invention se fixe pour but d'apporter une solution aux problèmes mentionnés ci-dessus, tout en palliant les inconvénients des systèmes de l'Art Connu.

Suivant l'invention, telle que définie dans la revendication 1, le connecteur pour un appareil lecteur de carte à microcircuit comportant un corps supportant des éléments de contact balais destinés à être mis en contact électrique avec des plages conductrices associées audit microcircuit de la carte lorsque celle-ci est insérée dans le connecteur; au moins une partie des éléments de contact balais étant reliée à un circuit électronique comportant des moyens pour contrôler des opérations d'insertion ou de retrait de la carte dans le lecteur, ledit circuit étant relié, d'autre part, avec le circuit électronique du lecteur de carte; ledit connecteur étant caractérisé en ce qu'il comprend et porte ledit circuit électronique.

L'invention a encore pour objet un appareil lecteur de carte comprenant un tel connecteur.

Ainsi, le connecteur selon l'invention porte lui-même et non pas le lecteur, un circuit électronique qui permet de contrôler les différentes opérations d'insertion ou de retrait de la carte dans le lecteur de carte.

De ce fait, on simplifie la construction du lecteur de carte. Ce dernier peut être connecté à différents connecteurs comprenant chacun un circuit électronique intégré apte à contrôler l'insertion de cartes à microcircuit de différentes natures.

L'invention sera mieux comprise et d'autres caractéristiques et avantages apparaîtront à la lecture de la description qui suit en référence aux figures annexées, et parmi lesquelles:
- La figure 1 représente en perspective un connecteur selon l'invention, une carte à puce et schématiquement le circuit électronique avec lequel le connecteur est destiné à être relié,
- La figure 2 illustre schématiquement en éclaté, un exemple de connecteur pour appareil lecteur de carte à microcircuit,
- La figure 3 illustre schématiquement, en coupe longitudinale, un exemple de connecteur pour appareil lecteur de carte à microcircuit, selon un autre mode de réalisation de l'invention;
- La Figure 4 illustre, vue de haut, la disposition d'un circuit intégré spécifique utilisé dans cet autre mode de réalisation de connecteur selon l'invention.
- La figure 5a illustre schématiquement, en éclaté, un exemple de connecteur pour appareil lecteur de carte à microcircuit, selon le mode de réalisation de l'invention représenté à la figure 1;
- La figure 5b illustre une vue partielle en coupe de ce connecteur.

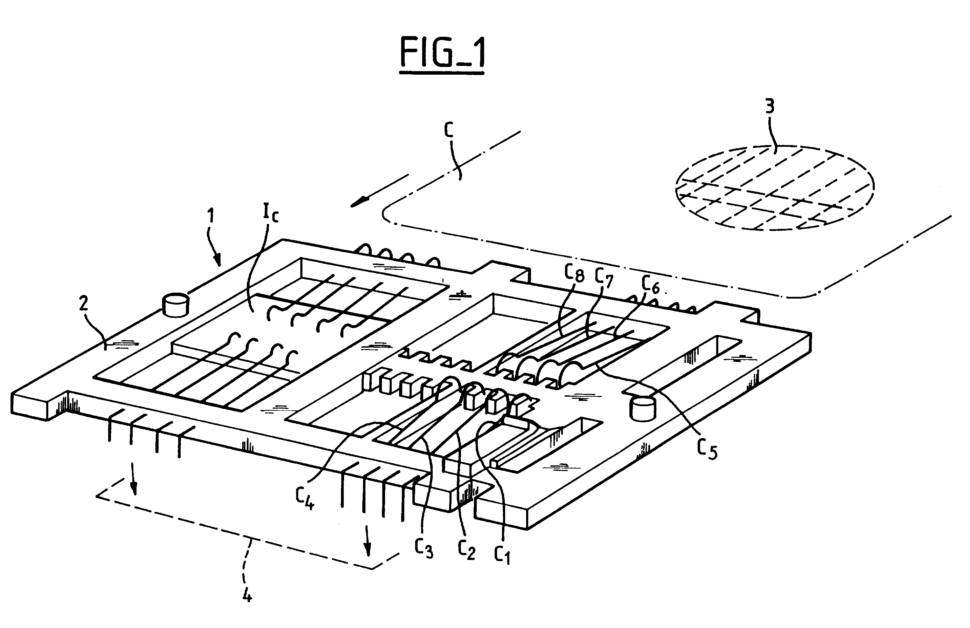

Dans la réalisation de la figure 1, le connecteur 1 pour appareil lecteur de carte C à microcircuit 3 comporte un corps 2 supportant des éléments de contacts balais C₁ à C₈, destinés à être mis en contact électrique avec des plages conductrices associées audit microcircuit I_{C} lorsque la carte C est insérée dans le connecteur 1.

Conformément à l'invention, ce connecteur 1 comporte un circuit électronique I_{C} relié,d'une part, avec au moins une partie desdits éléments de contact balais C₁ à C₈ et, d'autre part, avec le circuit électronique 4 du lecteur de carte. Le circuit électronique I_{C} porté par le connecteur 1 comporte des moyens qui seront détaillés plus loin pour contrôler des opérations d'insertion ou de retrait de la carte C dans le lecteur de carte.

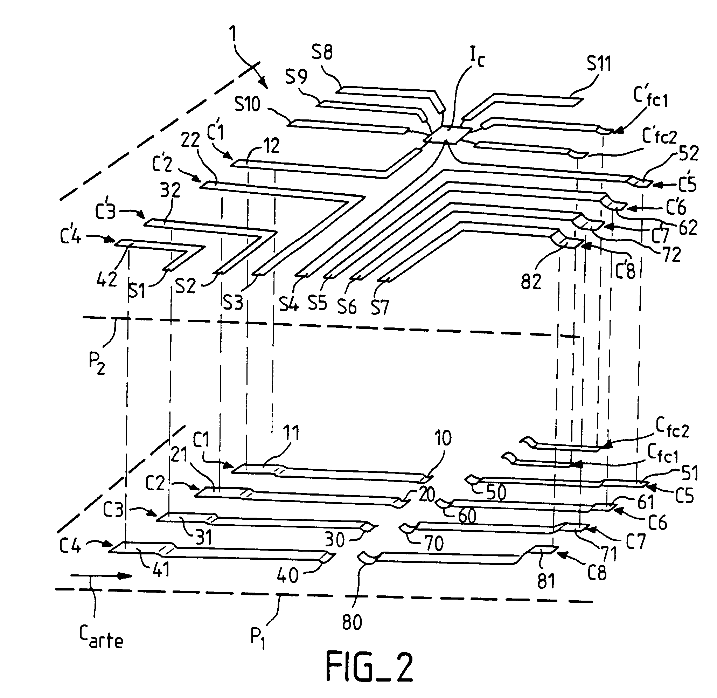

La figure 2 illustre schématiquement, en éclaté, l'agencement d'un connecteur 1 selon un mode de réalisation particulier de l'invention. Plus précisément, sur cette figure, on n'a illustré que les dispositions relatives aux différents éléments de contacts du connecteur.

Selon une caractéristique essentielle de l'invention, on dispose un circuit intégré I_{C} au sein même du connecteur 1. Plus précisément, le circuit I_{C} est disposé dans un logement ménagé dans l'épaisseur de l'isolant du cadre du connecteur (non représenté sur cette figure).

Le connecteur comprend deux jeux d'éléments de contacts.

Un premier jeu, situé sensiblement dans un premier plan P₁, ou plan inférieur sur la figure 2, comprend une série de paires de contacts balais ; quatre paires dans l'exemple illustré, C₁ à C₈. Ces contacts balais, C₁ à C₈, sont constitués de lames flexibles, parallèles entre elles et dont des premières extrémités en vis à vis, 10 à 80, présentent une courbure et sont destinées à être mises en contact avec des plages de contacts correspondantes (non représentées) de la carte à microcircuit, symbolisée par la flèche C, après insertion de celle-ci dans le connecteur 1. Le premier jeu de contacts comprend également, avantageusement, une paire de contacts de "fin de course" C_{fc1} et C_{fc2}, respectivement.

Dans l'exemple illustré, l'allocation des balais est la suivante :
- élément de contact C₁ : amenée de la tension d'alimentation ;
- élément de contact C₅ : mise à la masse ;
- éléments de contact C₂ à C₄ et C₆ à C₈ : contacts balais de "signaux" (entrées et/ou sorties).

En soi, ces dispositions sont entièrement communes à l'art connu.

Le connecteur 1 comprend un second jeu d'élément de contacts, C'₁ à C'₈, C'_{fc1}-C'_{fc2} et S₁ à S₁₁, disposés dans un second plan P₂, supérieur sur la figure et sensiblement parallèle au premier. Ce jeu d'éléments de contacts, C'₁ à C'₈, C'_{fc1}-C'_{fc2} et S₁ à S₁₁, est connecté entre les éléments de contacts balais, C₁ à C₈, les entrées-sorties du microcircuit I_{C} et les circuits électroniques de l'appareil lecteur de carte à microcircuit (non représenté).

Le connecteur ci-dessus est généralement monté sur un circuit imprimé supportant l'électronique du lecteur, par exemple par soudage de broches d'entrées-sorties dans des trous métallisés réalisés sur le circuit imprimé. C'est donc par l'intermédiaire de pistes conductrices, connectées, d'une part, aux trous métallisés, et, d'autre part, aux circuits électroniques de l'appareil lecteur, que s'effectuent les liaisons électriques entre le second jeu d'éléments de contacts et ces circuits électroniques.

Parmi les éléments de contacts du second jeu, on peut distinguer trois types, selon leurs raccordements :
- Une première partie, C'₂ à C'₈ (dans l'exemple illustré), établit une connexion directe entre les éléments de contact balais du connecteur 1 et l'électronique de l'appareil lecteur, via le circuit imprimé précité. Il s'agit, en général de tout ou partie des éléments de contact balais "signaux" (soit C₂ à C₄ et C₆ à C₈) dans l'exemple illustré. Contrairement à ce qui est représenté sur la figure 2, le balai élément de contact "masse" C₅, peut éventuellement être connecté de cette manière à l'électronique de l'appareil lecteur.
- Une deuxième partie, C'_{fc1}, C'_{fc2}, C₁ (dans l'exemple illustré), établit une connexion entre des éléments de contact balais du connecteur et certaines entrées-sorties du circuit intégré I_{C}. Il s'agit de contacts auxiliaires, généralement les balais éléments de contacts "fin de course", C_{fc1} et C_{fc2}, les balais éléments de contact tension d'alimentation, C₁, et éventuellement certains balais éléments de contact "signaux" ou le balais élément de contact "masse" C₅.
- Enfin, une troisième partie, S₄, S₈ à S₁₁, connecte directement des sorties et/ou entrées du circuit intégré I_{C}, aux circuits électroniques de l'appareil lecteur, via le circuit imprimé précité. Un des éléments de contact ci-dessus, véhicule l'alimentation en énergie électrique, qui transite par le circuit intégré I_{C}.

Dans la configuration matérielle particulière, représentée sur la figure 2, pour des raisons de facilité de réalisation du connecteur 1, les éléments de contacts, C'₂ à C'₄, C'₅ à C'₈, du jeu supérieur, sont prolongés par des éléments de contacts allongés, S₃ à S₁, S₄ à S₇, respectivement, sensiblement parallèles entre eux, suivant une direction orthogonale à la direction des éléments de contacts, C'₂ à C'₄, C'₅ à C'₈.

Naturellement, quelle que soit la solution retenue pour l'élément balais de "masse" C₅, connexion directe ou non, le circuit intégré I_{C} comporte une connexion de masse reliée à la masse, c'est-à-dire à C'₅-S₄ (dans l'exemple illustré).

Pour mieux mettre en évidence la disposition des éléments de contacts des deux jeux, on a éloigné les plans P₁ et P₂ de façon exagérée. En réalité, les deux jeux sont dans des plans, P₁ et P₂, faiblement écartés, de manière à ce que les secondes extrémités, 11 à 81, des éléments balais, C₁ à C₈, opposées premières extrémités 10 à 80, soient mises en contact galvanique avec les extrémités, 12 à 82, en relation de vis à vis, des éléments de contacts correspondants du jeu supérieur, C'₁ à C'₈. Il en est de même des extrémités en vis à vis des éléments de contacts de "fin de course", C_{fc1}-C_{fc2}, d'une part, et C'_{fc1}-C'_{fc2}, d'autre part.

Les extrémités d'éléments de contact en vis à vis peuvent être soudées.

Pour établir les liaisons avec les entrées-sorties du circuit intégré I_{C}, on peut faire appel à la technique classique de soudage de fils.

L'étude et la réalisation du circuit intégré sont réalisées en faisant appel également aux techniques de développement classiques de circuits intégrés spécifiques. On englobe sous le terme,"circuit intégré" notamment, aussi bien les circuits intégrés monolithiques que les circuits hybrides.

Les principales fonctions accomplies par le circuit intégré IC sont les suivantes :
- la scrutation de l'état de la paire de contacts "fin de course", C_{fc1}-C_{fc2} ;
- la commande des mises sous et hors tension du microcircuit de la carte Cₐᵣₜₑ, en fonction de l'état précité ; la fonction interrupteur étant intégrée dans le circuit I_{C} ;
- des fonctions de tests éventuels de certaines caractéristiques électriques entre éléments de contact balais : par exemple, la résistance ou l'impédance entre deux éléments de contact balais ou la réponse à un signal impulsionnel;
- l'intégration éventuelle de certaines fonctions standards relatives à la transmission de données.

Les techniques actuelles d'intégration à large échelle permettent d'intégrer des fonctions supplémentaires, telles que des fonctions relatives à l'exploitation de la carte à microcircuit C.

Il est également possible d'implémenter sur le connecteur 1, à l'aide du circuit intégré I_{C}, la totalité des fonctions logiques de l'appareil lecteur, l'électronique extérieure au connecteur se limitant, dans ce cas, aux organes d'entrées-sorties.

Il est alors possible de proposer, en tant que composant actif, des connecteurs, de divers modèles, différant essentiellement par les capacités du circuit intégré, exprimées en termes de fonctionnalités, par exemple.

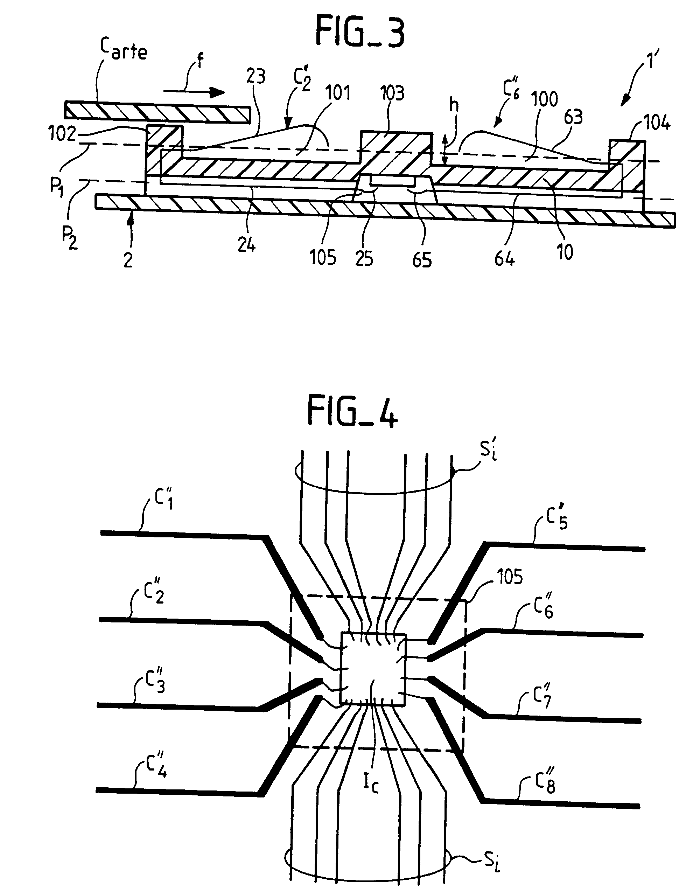

La figure 3 illustre, en coupe, un exemple de connecteur 1' selon un autre mode de réalisation. Cette figure met en évidence la configuration matérielle du corps 10 du connecteur.

. Une seule paire d'éléments balais, C"₂-C"₆, est visible sur cette figure 3, paire qui correspond fonctionnellement à la paire C₂-C₆ de la figure 2. Toutefois il existe le même nombre de paires de balais pour un type de carte C donnée. Il en est de même des paires de contacts de "fin de course" (non visibles sur cette figure 3).

Le corps 10 du connecteur 1', en matériau électriquement isolant, est supporté, de façon classique, par-un circuit imprimé 4 sur lequel est implantée l'électronique de l'appareil lecteur (non représentée). Tournées vers le haut (dans l'exemple illustré), il comprend deux cavités, 100 et 101, situées de part et d'autre d'une surélévation centrale 103. On dispose dans ces cavités, 100 et 101, les éléments de contact balais, par exemple C"₂ et C"₆, ou plus exactement les parties supérieures, 23 et 63, respectivement, de ceux-ci. Dans ce mode de réalisation, les éléments de contact balais ont une forme allongée et sont repliés sur eux-mêmes de manière à être noyés dans des zones déterminées du corps 10 du connecteur 1' et qu'ils débouchent dans une cavité interne 105, contenant le circuit intégré I_{C}. Cette disposition permet, avantageusement, de connecter directement les entrées-sorties appropriées du circuit intégré IC aux éléments de contact balais, sans passer par des contacts intermédiaires (tels que C'₁ ou C'₅ sur la figure 2).

On peut également faire transiter tous les éléments de contact balais par le circuit intégré I_{C}, même si, fonctionnellement, ce transit n'est nécessaire que pour quelques uns des éléments de contact balais : tension d'alimentation, etc. Il suffit alors de prévoir des liaisons internes appropriées.

Des rebords latéraux, 102 et 104, bordent les cavités 101 et 100, respectivement. L'ensemble définit un cadre sur lequel glisse la carte Cₐᵣₜₑ lorsqu'elle est introduite dans le lecteur (flèche f). La surélévation centrale 103 présente avantageusement de la même hauteur h que les rebords latéraux pour faciliter le guidage de la carte C. Les extrémités non libres des éléments de contact balais, C"₂ et C"₆, sont noyées dans ces rebords latéraux, 102 et 104, qui les verrouillent en position légèrement inclinée vers le haut, par rapport au plan P₁. En conséquence, en raison de l'élasticité du matériau les composant, les parties libres des contacts jouent le rôle de ressorts frottant sur la face inférieure de la carte, qui comporte les plages de contacts du microcircuit (non représentées). C'est dans l'épaisseur des rebords latéraux que les balais sont repliés, comme il a été indiqué précédemment. Ils s'enfoncent alors selon une direction sensiblement verticale (sur la figure) et sont repliés une seconde fois (plan P₂) pour pouvoir aboutir dans la cavité centrale 105 : parties 24 et 64.

La figure 4 illustre plus particulièrement le câblage du circuit intégré I_{C}. Celui-ci est représenté dans sa cavité 105, vu de haut par rapport à la figure 3. Dans cet exemple, les balais aboutissent tous dans cette cavité 105, sur la partie gauche, pour les balais C"₁ à C"₄, et sur la partie droite, pour les balais C"₅ à C"₈, et ils sont connectés à des entrées-sorties du circuit intégré I_{C}.

On a également représenté, sur les parties basse et haute de la figure 4, deux faisceaux d'éléments de contacts, Sᵢ et S'ᵢ, respectivement, également connectés à des entrées-sorties du circuit intégré I_{C}. Ces éléments de contact jouent un rôle similaire aux éléments de contacts S₁ à S₁₁ de la figure 2. Ils sont connectés, via le circuit imprimé 4, aux circuits électroniques du lecteur (non représentés).

Dans ce qui précède, on a supposé que la puce de semi-conducteur I_{C}. était "nue", les éléments de contacts remplaçant les broches d'entrée-sortie. Cela suppose également que, une fois les connexions réalisées entre les éléments de contact et les entrées-sorties de la puce I_{C}, il est nécessaire de procéder à des opérations d'encapsulation spécifiques, de manière à protéger la puce. On peut aussi, en tant qu'alternative, monter la puce dans un boîtier "ISO" standard, puis installer ce boîtier dans la cavité 105 du corps 10 du connecteur 1'. Cette disposition permet d'éviter les opérations de connexion et d'encapsulation spécifiques.

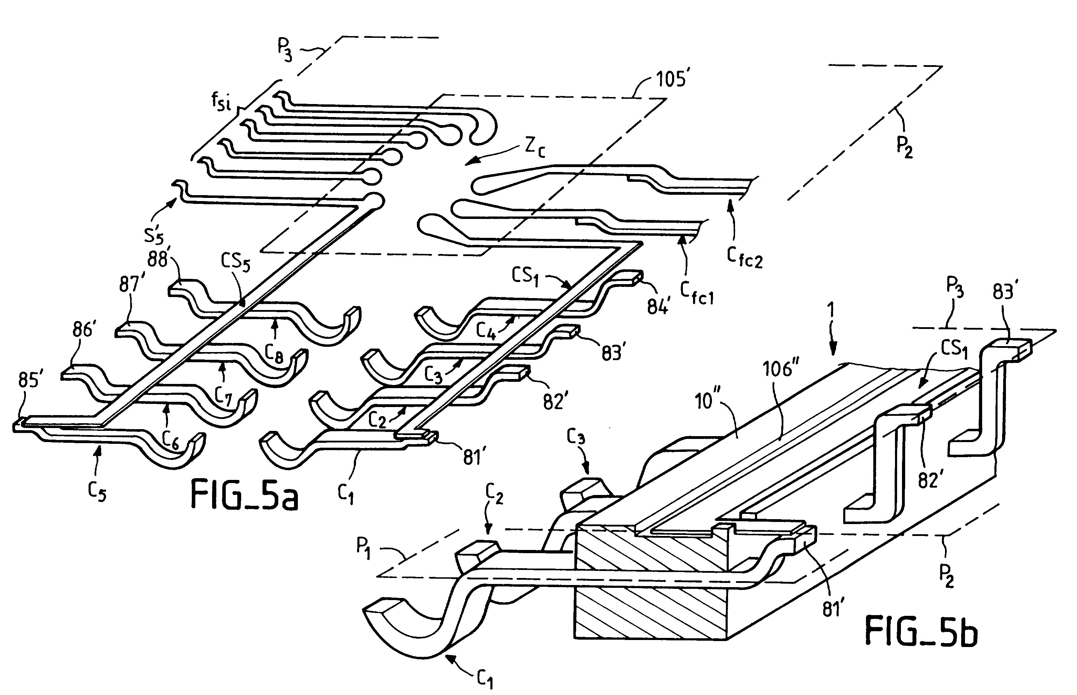

La figure 5a illustre un autre mode de réalisation d'un connecteur 1" selon l'invention.

Dans ce mode de réalisation la zone 105' dans laquelle se trouve le circuit intégré (I_{C}) est déportée latéralement par rapport aux paires de contacts C₁ à C₈ Cette disposition permet, comme on va le montrer, de n'utiliser qu'un seul cadre de montage. Les plages de contacts à connecter aux entrées/sorties du circuit intégré I_{C} sont situées dans un plan confondu avec le plan P₂, tel que défini précédemment. Elles sont reliées, comme il a été décrit, soit directement aux circuits électroniques du lecteur, soit à la paire de contacts de fin de course C_{fc1}-C_{fc2}, soit à la masse et au balai correspondant C₅, soit encore au balai d'alimentation C₁ (et éventuellement à certains balais de signaux dans un exemple de réalisation non décrit). Le faisceau de liaisons directes avec les circuits électroniques du lecteur est repéré sous la référence générale f_{Si}. La liaison de masse vers le lecteur porte la référence S'₅. Les extrémités arrières, 82' à 84' et 86' à 88', des balais de signaux (non connectés aux entrées/sorties du circuit intégré), C₂ à C₄ et C₆ à C₈ sont relevées et courbées en forme de "S" aplati, de manière à affleurer dans un plan P₃ situé à un niveau supérieur (sur la figure 5a) au niveau du plan P₂. Il en est de même des extrémités du faisceau de connexions f_{Si} qui affleurent au niveau du plan P₃, ainsi que de l'extrémité de S'₅ (connexion de masse). Par contre les extrémités des balais d'alimentation, C₁, et de masse, C₅, sont relevées et courbées mais affleurent sensiblement au niveau du plan P₂. Cette disposition permet de connecter les plages appropriées du circuit IC par l'intermédiaire de lames conductrices, CS₁ et CS₅, respectivement, aux balais C₁ et C₅. Ces lames sont comprises dans le plan P₂.

La figure 5b illustre,- en coupe partielle, de façon plus détaillée, l'agencement des balais et des lames CS₁ et CS₂ précitées dans le corps 10" du connecteur 1". Le fragment illustré montre les trois balais C1, C2 et C3 ainsi que la lame conductrice CS₁. Cette dernière est disposée dans une rainure 106", orthogonale aux lames constituant les balais. On constate que les extrémités 82' et 83' affleurent au niveau du plan P₃, alors que l'extrémité 81' est juste en dessous du plan P₂, de manière à être connectée avec la lame CS₁.

On peut donc souder directement (dans le plan P₃) toutes les extrémités des connexions du faisceau f_{Si}, la connexion de masse S'₅ et toutes les extrémités des balais "signaux", c'est-à-dire les balais non directement reliés aux entrées-sorties du circuit intégré, ou encore aux plages de contact du circuit I_{C}.. On a supposé que les signaux générés par la paire de contacts de "fin de course" C_{fc1}-C_{fc2} transitaient par le circuit intégré pour y être traités. Les extrémités de cette paire de contact affleurent donc également sensiblement au niveau du plan P₂, pour être connectées à deux plages de contact du circuit I_{C}.

Comme précédemment, les lames souples formant les balais sont situées sensiblement dans le plan P₁, sur la plus grande partie de leur longueur.

La description ci-dessus montre que le circuit I_{C} assure l'interface entre au moins une partie des éléments de contact (balais, contacts de "fin de course", etc.) habituellement utilisés dans les connecteurs de l'Art Connu et l'électronique du lecteur. En d'autres termes, la gestion des fonctions liées au contrôle de l'introduction, du retrait et du positionnement correct de la carte C est "transparente" pour cette électronique. Il suffit notamment de fournir, via les éléments de contacts S₁ à S₁₁, l'alimentation en énergie électrique du microcircuit de la carte, qui sert également à alimenter le circuit intégré I_{C}. Une fois la carte C correctement introduite, ou de façon plus générale, lorsque les règle de fonctionnement normal sont respectées (hors condition "d'arrachage", de tentative de fraude, etc.), les circuits électroniques du lecteur envoient et/ou reçoivent les signaux habituels à ce type d'application.

Le principal avantage, parmi les autres précédemment énoncés, est que le concepteur d'une application particulière, utilisant un lecteur de carte, est déchargé de la gestion précitée. Il lui suffit de sélectionner un connecteur, éventuellement d'un modèle particulier, offrant telles ou telles fonctionnalités, en tant que composant actif.

Bien entendu, l'invention n'est pas limitée aux exemples et aux applications que l'on vient de décrire et on peut y apporter de nombreuses modifications sans sortir du cadre de l'invention.

Ainsi, l'invention s'applique dans de nombreux domaines : cartes bancaires ou de crédit, carte de téléphone, "porte-monnaie électronique", péage, pointage de personnels, carte d'accès (sécurité), etc.

## Revendications

1. Connecteur (1) pour un appareil lecteur de carte (C) à microcircuit comportant un corps (2) supportant des éléments de contact balais (C1 à C8) destinés à être mis en contact électrique avec des plages conductrices (3) associées audit microcircuit de la carte (C) lorsque celle-ci est insérée dans le connecteur (1); au moins une partie des éléments de contact balais (C1 à C8) étant reliée à un circuit électronique (Ic) comportant des moyens pour contrôler des opérations d'insertion ou de retrait de la carte (C) dans le lecteur, ledit circuit (Ic) étant relié, d'autre part, avec le circuit électronique (4) du lecteur de carte; ledit connecteur étant caractérisé en ce qu'il comprend et porte ledit circuit électronique (Ic).

2. Connecteur selon la revendication 1, caractérisé en ce qu'il comporte des éléments de contact supplémentaires (S₁ à S₁₁) destinés à être connectés au circuit électronique (4) du lecteur, le circuit électronique (I_{C}) porté par le corps du connecteur étant relié à au moins une partie desdits éléments de contact supplémentaire (S₁ à S₁₁).

3. Connecteur selon l'une des revendications 1 ou 2 caractérisé en ce que ledit circuit électronique et une puce de circuit intégrée et en ce que des entrées-sorties de ladite puce (I_{C}) sont connectées directement à des éléments desdits contact balais (C₁, C₅) et des entrées-sorties de ladite puce (I_{C}) sont connectées directement à des éléments desdits contacts supplémentaires (S₈ à S₁₁), par une seconde extrémité.

4. Connecteur selon la revendication 3, caractérisé en ce qu'en outre au moins une partie desdits éléments de contact balais (C₂ à C_{4,} C₅ à C₈) sont connectés directement à au moins une partie desdits éléments de contact supplémentaires (S₁ à S₇), par une seconde extrémité, sans transiter par des entrées-sorties de ladite puce (I_{C}).

5. Connecteur selon l'une quelconque des revendications précédentes, caractérisé en ce qu'il comprend en outre des éléments de contact de détection de "fin de course" (C_{fc1}-C_{fc2}) de manière à détecter l'insertion correcte de la carte (Cₐᵣₜₑ) dans le connecteur (1).

6. Connecteur selon la revendication 5, caractérisé en ce que lesdits éléments de contact de détection de "fin de course" (C_{fc1}-C_{fc2}) sont connectés à des éléments de contact supplémentaires, eux-mêmes connectés directement à des entrées-sorties de ladite puce (I_{C}), de façon que l'état de ces éléments de contact de détection de "fin de course" (C_{fc1}-C_{fc2}) soit contrôlé par ledit circuit électronique (I_{C}).

7. Connecteur selon la revendication 6, caractérisé en ce que, l'un desdits éléments de contact balais (C₁) est destiné à véhiculer l'alimentation en énergie électronique dudit microcircuit, ledit circuit électronique (IC) reçoit, par l'un desdits éléments de contact supplémentaires, l'alimentation en énergie, en ce qu'il comporte une fonction interrupteur intégrée, et en ce que l'alimentation effective de l'élément est réalisée, sous la commande de ladite fonction interrupteur intégré lorsque le circuit électronique (I_{C}) détecte un état desdits éléments de contact de détection de "fin de course" (C_{fc1}-C_{fc2}) indiquant que la carte (C) est correctement insérée et occupant cette alimentation dans le cas contraire, de manière à commander les mises sous et hors tension du microcircuit de ladite carte (C).

8. Connecteur selon l'une quelconque des revendications 1 à 7, caractérisé en ce que, ledit corps (10) est en matériau isolant électriquement, et comporte deux cavités ouvertes (100, 101) dans lesquelles sont disposés lesdits éléments de contact balais (C"₁ à C"₈) et des rebords (102, 104) formant cadre guidant ladite carte (C) lors de son insertion.

9. Connecteur selon la revendication 8, caractérisé en ce que lesdits éléments de contact balais (C"₁ à C"₈) comprennent, chacun, une lame (23, 63) formant ressort dans la zone couvrant lesdites cavités (100, 101), de manière à frotter sur lesdites plages conductrices portées par ledit microcircuit lorsque la carte (C) est insérée dans le connecteur (1'), ces lames étant emprisonnées dans lesdits rebords et se prolongeant par des parties recourbées (24, 64) débouchant dans une cavité du corps dans laquelle est logée la puce de circuit intégré (I_{C}), pour pouvoir être connectées à des entrées-sorties de cette puce.

10. Appareil lecteur de carte (C) à microcircuit, caractérisé en ce qu'il comprend un connecteur selon l'une quelconque des revendications précédentes.

## Claims

1. Connector (1) for an apparatus for reading a smart card (C), which comprises a body (2) supporting brush contact elements (C1 to C8) intended to be brought into electrical contact with conducting areas (3) associated with the said microcircuit of the card (C) when the latter is inserted into the connector (1), at least part of the brush contact elements (C1 to C8) being connected to an electronic circuit (I_{C}) which includes means for controlling the operations of inserting the card (C) into the reader or for removing it therefrom, the said circuit (I_{C}) being connected, moreover, to the electronic circuit (4) of the card reader, the said connector being characterized in that it comprises and carries the said electronic circuit (I_{C}).

2. Connector according to Claim 1, characterized in that it includes additional contact elements (S₁ to S₁₁) intended to be connected to the electronic circuit (4) of the reader, the electronic circuit (I_{C}) carried by the body of the connector being connected to at least part of the said additional contact elements (S₁ to S₁₁).

3. Connector according to either of Claims 1 and 2, characterized in that the said electronic circuit is an integrated circuit chip and in that input/output pads on the said chip (I_{C}) are connected directly to elements of the said brush contacts (C₁, C₅) and input/output pads on the said chip (I_{C}) are connected directly to elements of the said additional contacts (S₈ to S₁₁), via a second end.

4. Connector according to Claim 3, characterized in that furthermore at least some of the said brush contact elements (C₂ to C₄, C₅ to C₈) are connected directly to at least some of the said additional contact elements (S₁ to S₇), via a second end, without passing through input/output pads on the said chip (I_{C}).

5. Connector according to any one of the preceding claims, characterized in that it furthermore comprises "end of travel"-detection contact elements (C_{fc1} - C_{fc2}) so as to detect correct insertion of the card (C_{ard}) into the connector (1).

6. Connector according to Claim 5, characterized in that the said "end of travel"-detection contact elements (C_{fc1} - C_{fc2}) are connected to additional contact elements which are themselves connected directly to input/output pads on the said chip (I_{C}) so that the state of these "end of travel"-detection contact elements (C_{fc1} - C_{fc2}) is controlled by the said electronic circuit (I_{C}).

7. Connector according to Claim 6, characterized in that one of the said brush contact elements (C₁) is intended to convey the supply of electrical energy for the said microcircuit and the said electronic circuit (I_{C}) receives the energy supply via one of the said additional contact elements, in that it includes an integrated switching function and in that the element is effectively supplied, under the control of the said integrated switching function, when the electronic circuit (I_{C}) detects a state of the said "end of travel"-detection contact elements (C_{fc1} - C_{fc2}) indicating that the card (C) is correctly inserted and blocking this supply in the opposite case, so as to control the switching-on and switching-off of the microcircuit of the said card (C).

8. Connector according to one of Claims 1 to 7, characterized in that the said body (10) is trade of an electrically insulating material and includes two open cavities (100, 101), in which the said brush contact elements (C"₁ to C"₈) are placed, and rims (102, 104) which form a frame guiding the said card (C) during its insertion.

9. Connector according to Claim 8, characterized in that the said brush contact elements (C"₁ to C"₈) each comprise a blade (23, 63) forming a spring in the region covering the said cavities (100, 101) so as to rub against the said conducting areas carried by the said microcircuit when the card (C) is inserted into the connector (1'), these blades being held captive in the said rims and being extended by bent-over parts (24, 64), which emerge in a cavity in the body in which the integrated circuit chip (I_{c}) is housed, in order to be connected to input/output pads on this chip.

10. Apparatus for reading a smart card (C), characterized in that it comprises a connector according to any one of the preceding claims.

## Patentansprüche

1. Verbindungsstück (1) für eine eine Mikroschaltung aufweisende Kartenleseeinheit (C), mit einem Gehäuse (2), das Bürstenkontaktelemente (C1 bis C8) trägt, die dazu bestimmt sind in elektrischen Kontakt mit den Leiterbereichen (3) zu gelangen, die mit der Mikroschaltung der Karte (C) verbunden sind, wenn diese Karte in das Verbindungsstück (1) eingeführt ist, wobei mindestens ein Teil der Bürstenkontaktelemente (C1 bis C8) an einer elektronischen Schaltung (Ic) angeschlossen ist, wobei die Schaltung Mittel umfaßt, um das Hineinführen oder das Entnehmen der in der Leseeinheit befindlichen Karte (C) zu überwachen, wobei diese Schaltung (Ic) andererseits an die elektronische Schaltung (4) des Kartenlesers angeschlossen ist, dadurch gekennzeichnet, daß das Verbindungsstück diese elektronische Schaltung (Ic) aufweist und trägt.

2. Verbindungsstück nach Anspruch 1, dadurch gekennzeichnet, daß es zusätzliche Kontaktelemente (S₁ bis S₁₁) umfaßt, die dazu bestimmt sind an die elektronische Schaltung (4) der Leseeinheit angeschlossen zu werden, wobei die elektronische Schaltung (I_{C}) vom Gehäuse des Verbindungsstücks getragen wird, das an mindestens einem Teil der zusätzlichen Kontaktelemente (S₁ bis S₁₁) angeschlossen ist.

3. Verbindungsstück nach einem der Ansprüche 1 oder 2, dadurch gekennzeichnet, daß die elektronische Schaltung, ein IC-Chip und die Ein- und Ausgänge des Chips (I_{C}) direkt an den Bürstenkontaktelementen (C₁, C₅) angeschlossen sind, und daß die Ein- und Ausgänge des Chips (I_{C}) direkt an den zusätzlichen Kontaktelementen (S₈ bis S₁₁) an einem zweiten Ende angeschlossen sind.

4. Verbindungsstück nach Anspruch 3, dadurch gekennzeichnet, daß ferner mindestens ein Teil der Bürstenkontaktelemente (C₂ bis C₄, C₆ bis C₈) direkt an mindestens einem Teil der zusätzlichen Kontaktelemente (S₁ bis S₇) an einem zweiten Ende angeschlossen sind, ohne über die Ein- und Ausgänge des Chips (I_{C}) geleitet zu werden.

5. Verbindungsstück nach einem der vorhergehenden Ansprüche, dadurch gekennzeichnet, daß es ferner Kontaktelemente zum Auffinden der "Endposition" (C_{fc1}-C_{fc2}) umfaßt, so daß das korrekte Einführen der Karte (Cₐᵣₜₑ) in das Verbindungsstück (1) ermittelt wird.

6. Verbindungsstück nach Anspruch 5, dadurch gekennzeichnet, daß die Kontaktelemente zum Auffinden der "Endposition" (C_{fc1}-C_{fc2}) an zusätzliche Kontaktelemente angeschlossen sind, die selber direkt an die Ein- und Ausgänge des Chips (I_{C}) in der Weise angeschlossen sind, daß der Zustand dieser Kontaktelemente zum Auffinden der "Endposition" (C_{fc1}-C_{fc2}) durch die elektronische Schaltung (I_{C}) überwacht wird.

7. Verbindungsstück nach Anspruch 6, dadurch gekennzeichnet, daß die elektronische Schaltung (I_{C}) die Energieversorgung von einem der zusätzlichen Kontaktelemente erhält, wobei eines dieser Bürstenkontaktelemente (C₁) dazu bestimmt ist, die elektronische Energieversorgung an die Mikroschaltung weiterzuleiten, daß das Verbindungsstück eine integrierte Schaltfunktion umfaßt, und daß die effektive Versorgung des Elementes durch Betätigen der integrierten Schaltfunktion durchgeführt wird, wenn die elektronische Schaltung (I_{C}) einen Zustand der Kontaktelemente zum Auffinden der "Endposition" (C_{fc1}-C_{fc2}) ermittelt, die angeben, daß die Karte (C) richtig eingeführt wurde, und diese Versorgung im umgekehrten Fall belegen, so daß das Anlegen und Zurücknehmen der Spannung an der Mikroschaltung der Karte (C) gesteuert wird.

8. Verbindungsstück nach einem der Ansprüche 1 bis 7, dadurch gekennzeichnet, daß das Gehäuse (10) ein elektrisch isolierendes Material und zwei offene Ausbuchtungen (100, 101) aufweist, in denen die Bürstenkontaktelemente (C"₁ bis C"₈) und Ränder (102, 104) angeordnet sind, die für die Führung der Karte (C) bei ihrem Einführen einen Rahmen bilden.

9. Verbindungsstück nach Anspruch 8, dadurch gekennzeichnet, daß jedes der Bürstenkontaktelemente (C"₁ bis C"₈) ein Blatt (23, 63) umfaßt, das in der die Ausbuchtungen (100, 101) überdeckenden Zone eine Feder bildet, so daß die Feder auf den durch die Mikroschaltung getragenen Leiterbereichen schleift, wenn die Karte (C) in das Verbindungsstück (1') eingeführt ist, wobei die Blätter zwischen den Rändern eingeschlossen sind und durch gebogene Teile (24, 64) verlängert werden, die in eine Ausbuchtung des Gehäuses münden, in der sich der IC-Chip (I_{C}) befindet, und um an den Ein- und Ausgängen dieses Chips angeschlossen werden zu können.

10. Kartenleseeinheit (C) mit Mikroschaltung, gekennzeichnet durch ein Verbindungsstück nach einem der vorhergehenden Ansprüche.
